# EUROPEAN PATENT SPECIFICATION

(11) **EP 4 163 893 B1**
(45) Date of publication and mention of the grant of the patent: **11.09.2024**
(21) Application number: 22198280.4
(22) Date of filing: 28.09.2022
(51) Int. Cl.: G08B 13/196

(54) **SYSTEM AND METHOD FOR GUIDING INTRUSION SENSOR INSTALLATION**
SYSTEM UND VERFAHREN ZUR FÜHRUNG EINER EINDRINGUNGSSENSORINSTALLATION
SYSTÈME ET PROCÉDÉ DE GUIDAGE D'INSTALLATION DE CAPTEUR D'INTRUSION

(30) Priority: 08.10.2021 US 202117497482
(43) Date of publication of application: 12.04.2023
(73) Proprietor: Honeywell International Inc., Charlotte, NC 28202 (US)
(72) Inventor: DIVAKARA, Manjunatha, Charlotte, 28202 (US)
(74) Representative: Haseltine Lake Kempner LLP

(56) References cited:
- US-A1- 2010 238 286
- US-A1- 2017 103 644
- US-A1- 2017 358 186
- US-B2- 10 453 329
- US-B2- 8 305 441

## Description

### Technical Field

The present disclosure pertains generally to installing intrusion sensors and more particularly to systems and methods for guiding intrusion sensor installation.

### Background

A variety of different buildings have security systems that monitor for indications of intrusion, fire and other undesirable events. When installing the myriad of sensors that may be included in a security system within a large facility, the installer may not know exactly what areas might be covered by the detection pattern of a particular sensor. Moreover, each type and model of sensor may have a detection pattern that is unique to that particular type and/or model of sensor. For example, and with respect to intrusion sensors, there are a variety of brands and models of motion detection sensors. There are a variety of brands and models of glass break detection sensors. It can be difficult for the installer to know the exact detection patterns of each intrusion sensor they are installing, and thus the installer may not recognize whether the installed intrusion sensors provide adequate coverage for a particular building space, or whether there are gaps in the coverage, known as blind spots. A need remains for a system for helping an installer to more efficiently install security sensors such as intrusion sensors within a security system. US2010/0238286 discloses a data processing apparatus comprising a video data receiver configured to receive video data, and an audio data receiver configured to receive audio data. The apparatus further comprises an alarm engine configured to analyse said received video and audio data and generate an alarm signal based on an output signal generated by said analysis. US 2017/0103644 discloses a security system that provides an easy to read and understand alarm notification. In one example, if an alarm condition is detected by a particular sensor of a security system, the security system may be configured to display on a display of the security system and/or a mobile device a user-defined region of a building space. US 2017/0358186 discloses a method for separating the motion detection zone(s) of an A/V recording and communication device from the motion alert zone(s) of the A/V recording and communication device.

### Summary

This disclosure relates generally to installing security sensors such as intrusion sensors within a security system and more specifically to a method as claimed in claim 1 below..

Optional features of the invention are set out in the dependent claims..

This disclosure also relates to a system as claimed in claim 11 below.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram showing an installer installing sensors within a building space;
Figure 2 is a schematic block diagram of an illustrative system usable by the installer of Figure 1;
Figure 3 is a flow diagram showing an illustrative method;
Figure 4 is a flow diagram showing an illustrative method;
Figure 5 is a flow diagram showing an illustrative method;
Figure 6 is a flow diagram showing an illustrative method;
Figure 7 is a flow diagram showing an illustrative method;
Figure 8 is a flow diagram showing an illustrative method;
Figure 9 is a flow diagram showing an illustrative method; and
Figure 10 is an example of an illustrative representation of a building space.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the scope of the appended claims.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

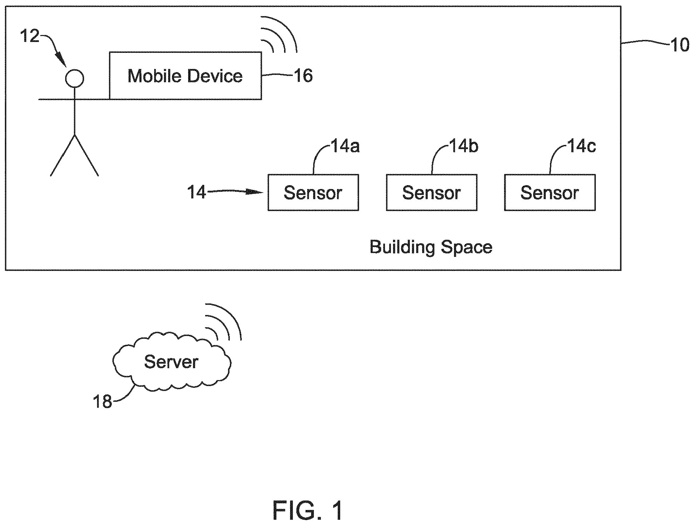

Figure 1 is a schematic block diagram showing an illustrative building space 10. In the example shown, an installer 12 is installing a number of sensors 14, individually labeled as 14a, 14b, 14c. It will be appreciated that this is merely illustrative, as the building space 10 may include any number of sensors 14, including one sensor 14, two sensors 14, or four or more sensors 14. At least some of the sensors 14 may be intrusion sensors such as motion sensors and glass break detection sensors. At least some of the sensors 14 may have a detection pattern that is unique to the sensor type 14 and/or sensor model. Accordingly, there may not be a standardized way of organizing where each of the sensors 14 is to be installed to obtain a desired coverage. The installer 12 may utilize a mobile device 16, such as a laptop computer, a tablet or a smartphone, to help determine adequate installation locations for each of the sensors 14 by comparing the detection pattern of each sensor 14 with the physical space in which each corresponding sensor 14 will be installed. This allows the installer 12 to see the coverage for each sensor 14, and how the installation locations might reduce or eliminate gaps in sensor coverage, known as blind spots.

The installer 12 may capture or otherwise obtain a representation of the building space 10. This may include downloading a representation of the building space 10. This may include using a camera built into the mobile device 16 to take a picture or video of the building space 10. The mobile device 16 may be configured to allow the installer 12 to indicate a proposed or actual installation location for each of the sensors 14, such as by superimposing a representation of each of the sensors 14 at a corresponding location on the representation of the building space that corresponds to the actual or planned installation location of the corresponding intrusion sensor in the building space 10. The mobile device 16 may obtain or be programmed with information describing the detection pattern for each sensor 14, and may compare the detection patterns for each sensor 14 with a volumetric representation of the building space 10 in order to ascertain where gaps in sensor coverage exist. This allows the installer 12 to see the impact of the proposed installation location of each of the sensors 14, and thus allows the installer 12 to change the proposed installation location, or to move one or more already installed sensors 14, in order to reduce or even eliminate undesirable blind spots in sensor coverage.

In some cases, the mobile device 16 may communicate wirelessly with a cloud-based server 18. In some instances, the mobile device 16 may rely upon information stored by the cloud-based server 18 that describes the detection pattern of each of a number of different brands of sensors 14 and for each of a variety of different models (within a particular brand) of sensors 14. In some instances, the mobile device 16 may analyze the detection patterns and determine where there may be gaps in sensor coverage. In some cases, the cloud-based server 18 may receive from the mobile device 16 a representation of the building space 10 and/or placement locations of the sensors 14, and the cloud-based server 18 may utilize the detection patterns to ascertain where the gaps in sensor coverage may exist. The cloud-based server 18 may then provide to the mobile device 16 the representation of the building space 10 with the detection patterns of each sensor 14 superimposed onto the representation of the building space 10 and possible blind spots identified. It is contemplated that the mobile device 16 may perform all of the processing, the cloud-based server 18 may perform all of the processing, or the mobile device 16 and the cloud-based server 18 may each perform some of the processing. These are just examples, and it is contemplated that any suitable hardware implementation may be used.

In some cases, an example detection pattern for a Passive InfraRed (PIR) sensor may have a detection range of about 6.1 m (20 feet) extending outwardly from the PIR sensor. In some cases, a PIR sensor may have a horizontal detection range that is about minus 45 degrees to about positive 45 degrees and a vertical detection range that is about minus 15 degrees to about positive 15 degrees, although some PIR sensors have a "look down" feature that expands the vertical detection range. Thus, the detection pattern for a PIR sensor may be considered as an expanding three-dimensional cone. A glass break sensor may have a range of about 25 feet in any direction, as long as there aren't obstructions that would get in the way. Other sensors may have different detection patterns.

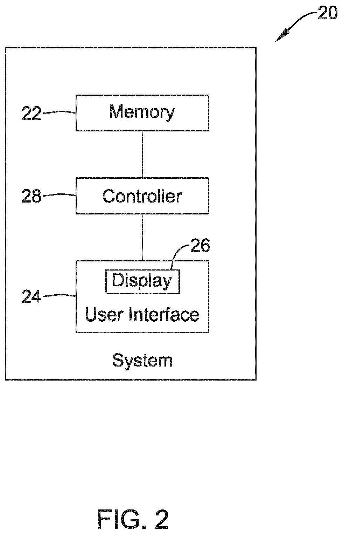

Figure 2 is a schematic block diagram of an illustrative system 20 that may be used by the installer 12 in optimizing sensor installation. The illustrative system 20 may be considered as being an example of the mobile device 16, although a division of what memory and computational power resides within the mobile device 16 and what memory and computational power resides within the cloud-based server 18 (or other hardware element) can be flexible. In one example, the cloud-based server 18 may only be used to provide information regarding sensor detection patterns, and the mobile device 16 may compare the sensor detection patterns with the representation of the building space 10 in order to ascertain the location(s) of any blind spots. In another example, the cloud-based server 18 may be used to compare the sensor detection patterns with the representation of the building space 10 and the cloud-based server 18 may be configured to ascertain the location(s) of any blind spots.

The system 20 includes a memory 22 for storing a representation of the building space 10. The representation may be a floor plan, for example, or a photo of the building space 10. The representation may be a two-dimensional image of the building space 10, although in some cases the representation is a three-dimensional image of the building space 10. In some cases, the representation may be or may be extracted from a Building Information Model (BIM) of the building space 10.

The illustrative system 20 includes a user interface 24 that includes a display 26. A controller 28 is operably coupled to the memory 22 and to the user interface 24. The user interface 24 may include a representation of a keyboard, such as on a touch screen display, in which the case the touch screen display is the display 26.

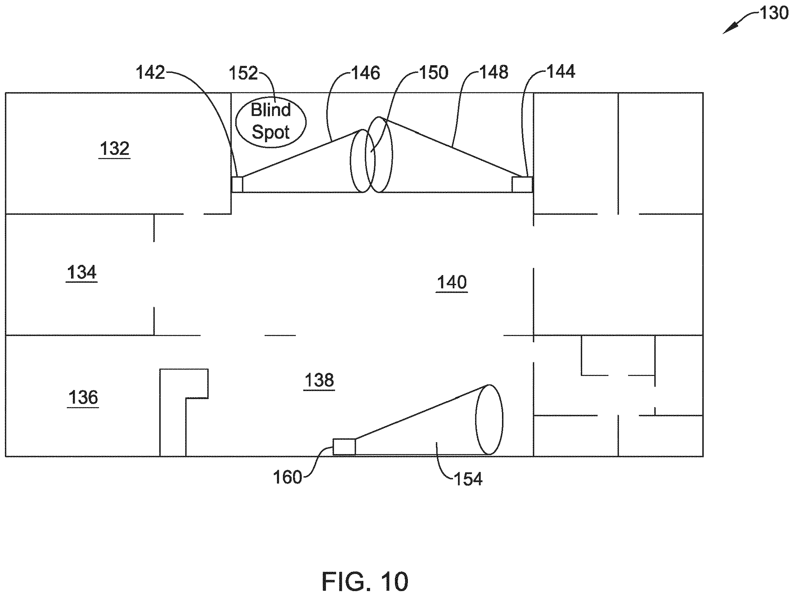

The controller 28 is configured to display on the display 26 of the user interface 24 at least part of the representation of the building space 10. The controller 28 is configured to allow a user to place via the user interface 24 a representation of each of a plurality of intrusion sensors 14 at a location on the representation of the building space 10 that corresponds to an actual or planned installation location of the corresponding intrusion sensor 14 in the building space 10. Each of the plurality of intrusion sensors 14 may be a non-video based motion sensor and/or a glass break sensor and each may have a predefined detection zone representative of a geographic area that the corresponding intrusion sensor covers. For example, a non-video based motion sensor may include a Passive Infrared (PIR) motion sensor, an ultrasonic based motion sensor and/or a microwave based motion sensor (e.g. mmwave radar). A non-video based glass break sensor may include a microphone and one or more electronic filters that are configured to identity sound patterns that match breaking glass. These are just examples. Smoke detectors may have a detection zone, and placement of smoke detectors may be aided in a similar manner. The controller 28 is configured to display on the display 26 a visual representation of the predefined detection zone for each of the placed intrusion sensors 14 on the representation of the building space 10. An example of this is shown in Figure 10.

In some instances, the controller 28 is further configured to determine one or more blind spots in the building space 10 that are not covered by any of the predefined detection zones of the placed intrusion sensors 14 and to highlight on the representation of the building space 10 one or more of the blind spots on the representation of the building space 10. In some instances, the building space 10 may have a first security zone with a first security level and a second security zone with a second security level, wherein highlighting one or more of the blind spots on the representation of the building space 10 includes highlighting the blind spots that correspond to the first security zone in a first format and highlighting the blind spot that corresponds to the second security zone in a second format. For example, in some cases, the blind spots in low security zones of the building space 10 are shown in phantom or not shown at all, while blind spots in high security zones may be shown in red.

The controller 28 (or server 18) is configured to identify a region in the building space 10 where the predefined detection zones of two or more intrusion sensors overlap, and to group the corresponding placed intrusion sensors into a first group. During operation of the security system, the controller 28 (or server 18) is configured to monitor an output of each of the intrusion sensors for detected intrusion events and to assign a greater confidence level over a default confidence level to those detected intrusion events that are detected to be occurring at a common time by two or more of the intrusion sensors in the first group.

In addition, the controller 28 (or server 18) may be configured to monitor an output of each of the intrusion sensors for detected intrusion events and to identify a location of an object in the building space 10 to be in the overlap region when detected intrusion events are detected to be occurring at a common time by two or more of the intrusion sensors 14 in the first group. This may help localize the detected intrusion event I the building space 10.

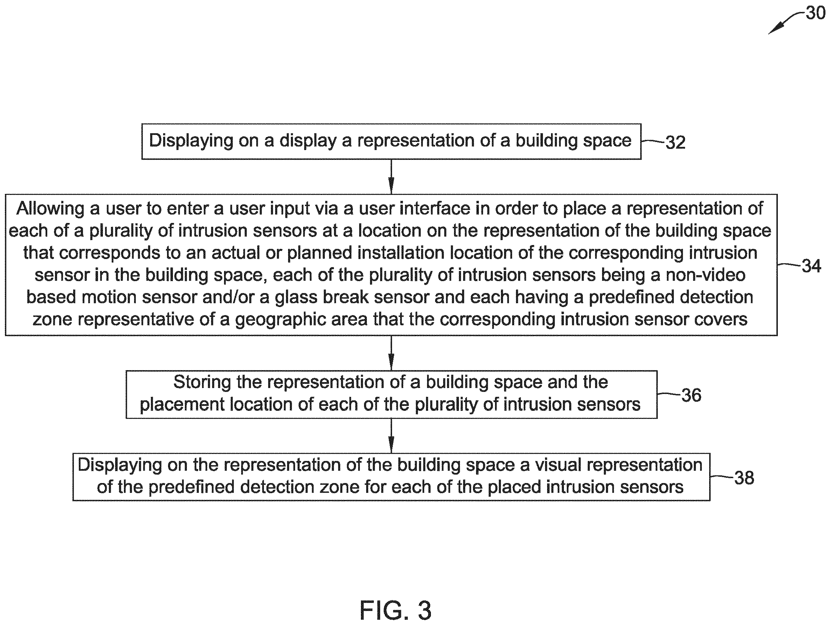

Figure 3 is a flow diagram showing an illustrative method 30. In the illustrative method 30, a representation of a building space is displayed on a display, as indicated at block 32. A user is allowed to enter a user input via a user interface in order to place a representation of each of a plurality of intrusion sensors at a location on the representation of the building space that corresponds to an actual or planned installation location of the corresponding intrusion sensor in the building space, each of the plurality of intrusion sensors being a non-video based motion sensor and/or a glass break sensor and each having a predefined detection zone representative of a geographic area that the corresponding intrusion sensor covers, as indicated at block 34. The representation of a building space and the placement location of each of the plurality of intrusion sensors is stored, as indicated at block 36. A visual representation of the predefined detection zone for each of the placed intrusion sensors is displayed (e.g. superimposed) on the representation of the building space, as indicated at block 38.

In some cases, the plurality of intrusion sensors include non-video based motion sensors such as but not limited to Passive InfraRed (PIR) motion detectors and/or ultrasonic motion detection sensors. The plurality of intrusion sensors may include a glass break detector. In some cases, the predefined detection zone representative of a geographic area of at least one of the plurality of intrusion sensors may include a three dimensional cone with a particular cone length and a particular cone angle.

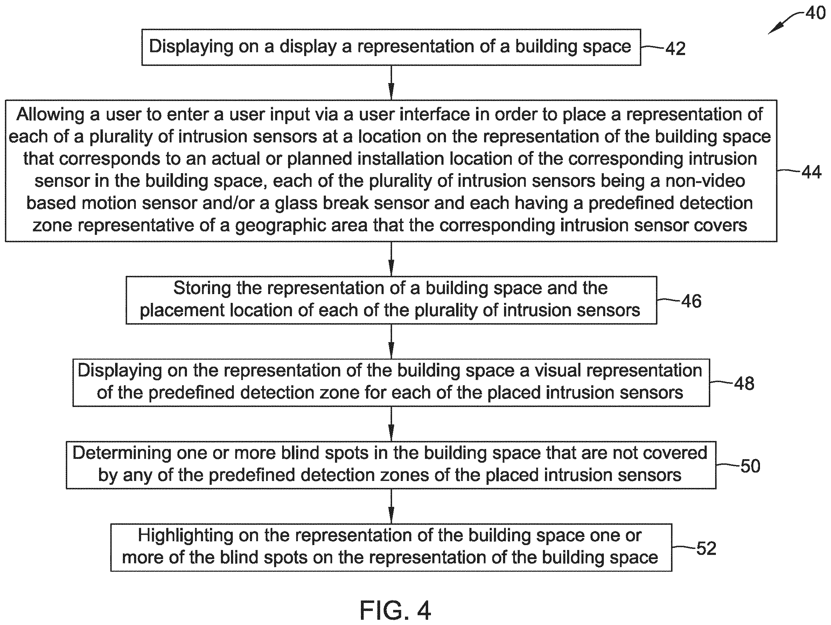

Figure 4 is a flow diagram showing an illustrative method 40. In the illustrative method 40, a representation of a building space is displayed on a display, as indicated at block 42. A user is allowed to enter a user input via a user interface in order to place a representation of each of a plurality of intrusion sensors at a location on the representation of the building space that corresponds to an actual or planned installation location of the corresponding intrusion sensor in the building space, each of the plurality of intrusion sensors being a non-video based motion sensor and/or a glass break sensor and each having a predefined detection zone representative of a geographic area that the corresponding intrusion sensor covers, as indicated at block 44. The representation of a building space and the placement location of each of the plurality of intrusion sensors is stored, as indicated at block 46. A visual representation of the predefined detection zone for each of the placed intrusion sensors is displayed on the representation of the building space, as indicated at block 48.

The method 40 includes determining one or more blind spots in the building space that are not covered by any of the predefined detection zones of the placed intrusion sensors, as indicated at block 50. The one or more blind spots are highlighted on the representation of the building space, as indicated at block 52. In some instances, the building space may have a first security zone with a first security level and a second security zone with a second security level, and highlighting one or more of the blind spots on the representation of the building space may include highlighting the blind spots that correspond to the first security zone and not highlighting the blind spot that corresponds to the second security zone. In some instances, the building space has a first security zone with a first security level and a second security zone with a second security level, and highlighting one or more of the blind spots on the representation of the building space may include highlighting the blind spots that correspond to the first security zone in a first format and highlighting the blind spot that corresponds to the second security zone in a second format. The first format may include a first color, for example, and the second format may include a second color that is different from the first color.

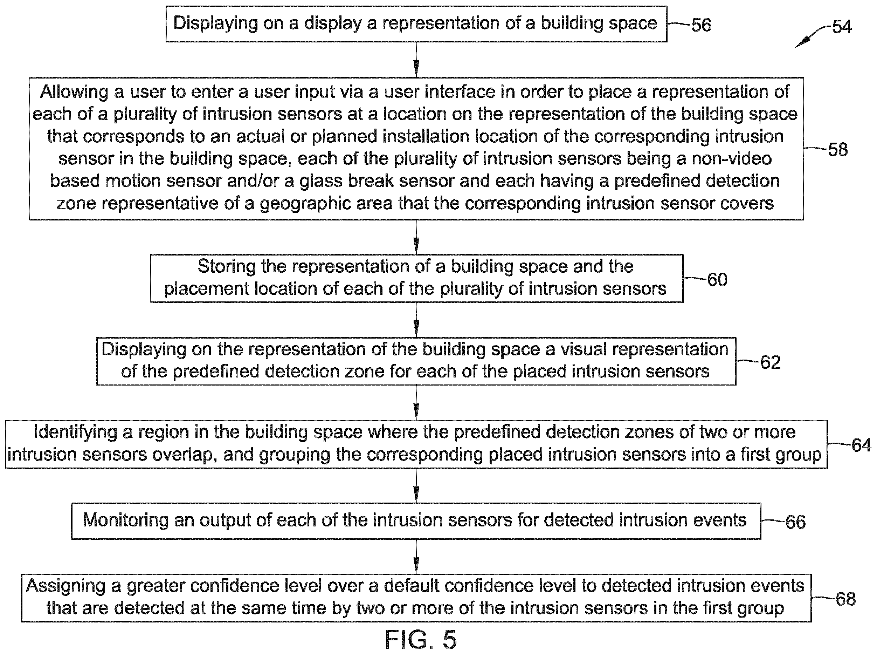

Figure 5 is a flow diagram showing an illustrative method 54. In the illustrative method 54, a representation of a building space is displayed on a display, as indicated at block 56. A user is allowed to enter a user input via a user interface in order to place a representation of each of a plurality of intrusion sensors at a location on the representation of the building space that corresponds to an actual or planned installation location of the corresponding intrusion sensor in the building space, each of the plurality of intrusion sensors being a non-video based motion sensor and/or a glass break sensor and each having a predefined detection zone representative of a geographic area that the corresponding intrusion sensor covers, as indicated at block 58. The representation of a building space and the placement location of each of the plurality of intrusion sensors is stored, as indicated at block 60. A visual representation of the predefined detection zone for each of the placed intrusion sensors is displayed on the representation of the building space, as indicated at block 62.

A region in the building space where the predefined detection zones of two or more intrusion sensors overlap is identified, and the corresponding placed intrusion sensors may be grouped into a first group, as indicated at block 64. Subsequent to installation, and during operation of the security system, an output of each of the intrusion sensors may be monitored for detected intrusion events, as indicated at block 66. A greater confidence level over a default confidence level may be assigned to detected intrusion events that are detected to be occurring at a common time by two or more of the intrusion sensors in the first group, as indicated at block 68.

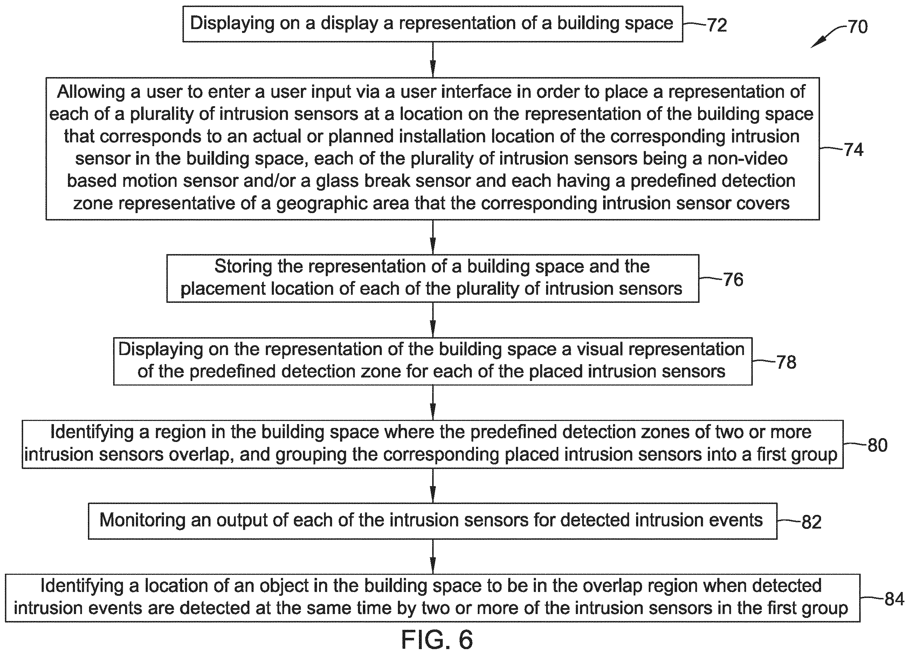

Figure 6 is a flow diagram showing an illustrative method 70. In the illustrative method 70, a representation of a building space is displayed on a display, as indicated at block 72. A user is allowed to enter a user input via a user interface in order to place a representation of each of a plurality of intrusion sensors at a location on the representation of the building space that corresponds to an actual or planned installation location of the corresponding intrusion sensor in the building space, each of the plurality of intrusion sensors being a non-video based motion sensor and/or a glass break sensor and each having a predefined detection zone representative of a geographic area that the corresponding intrusion sensor covers, as indicated at block 74. The representation of a building space and the placement location of each of the plurality of intrusion sensors is stored, as indicated at block 76. A visual representation of the predefined detection zone for each of the placed intrusion sensors is displayed on the representation of the building space, as indicated at block 78.

A region in the building space where the predefined detection zones of two or more intrusion sensors overlap in an overlap region is identified, and the corresponding placed intrusion sensors are grouped into a first group, as indicated at block 80. Subsequent to installation and during operation of the security system, an output of each of the intrusion sensors is monitored for detected intrusion events, as indicated at block 82. A location of an object in the building space is identified as being in the overlap region when detected intrusion events are detected to be occurring at a common time by two or more of the intrusion sensors in the first group, as indicated at block 84.

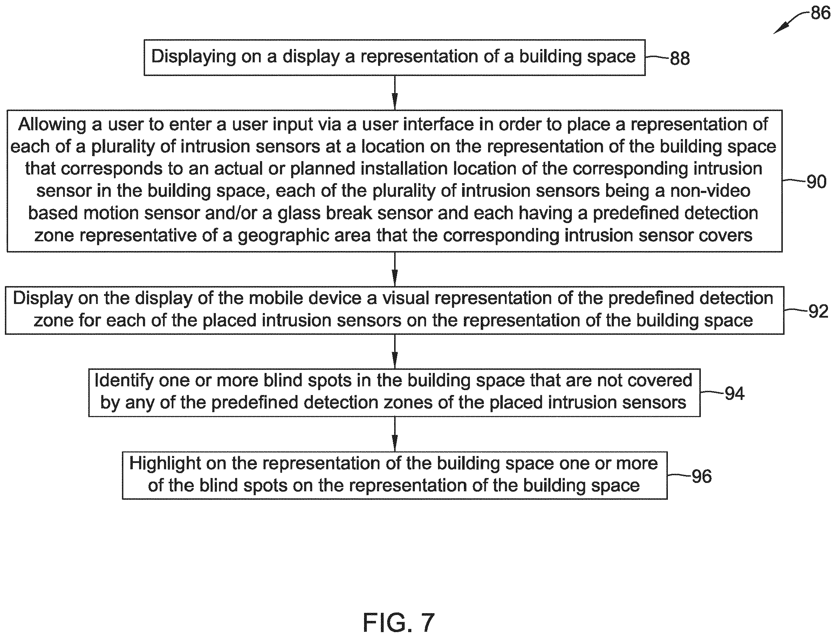

Figure 7 is a flow diagram showing an illustrative set of steps 86 that one or more processors of a mobile device (such as the controller 28 of the system 20) may carry out when the one or more processors of the mobile device execute stored instructions. The one or more processors are caused to display a representation of a building space on a display of the mobile device, as indicated at block 88. The one or more processors are caused to allow a user, via a user interface of the mobile device, to place a representation of each of a plurality of intrusion sensors at a location on the representation of the building space that corresponds to an actual or planned installation location of the corresponding intrusion sensor in the building space, each of the plurality of intrusion sensors being a non-video based motion sensor and/or a glass break sensor and each having a predefined detection zone representative of a geographic area that the corresponding intrusion sensor covers, as indicated at block 90. The one or more processors are caused to display on the display of the mobile device a visual representation of the predefined detection zone for each of the placed intrusion sensors on the representation of the building space, as indicated at block 92.

In some cases, the one or more processors are caused to identify one or more blind spots in the building space that are not covered by any of the predefined detection zones of the placed intrusion sensors, as indicated at block 94. The one or more processors may be caused to highlight on the representation of the building space one or more of the blind spots on the representation of the building space, as indicated at block 96. In some cases, the building space has a first security zone with a first security level and a second security zone with a second security level, and highlighting one or more of the blind spots on the representation of the building space may include highlighting the blind spots that correspond to the first security zone in a first format and highlighting the blind spot that corresponds to the second security zone in a second format. In some cases, the predefined detection zone representative of a geographic area of at least one of the plurality of intrusion sensors may include a three-dimensional cone with a particular cone length and a particular cone angle.

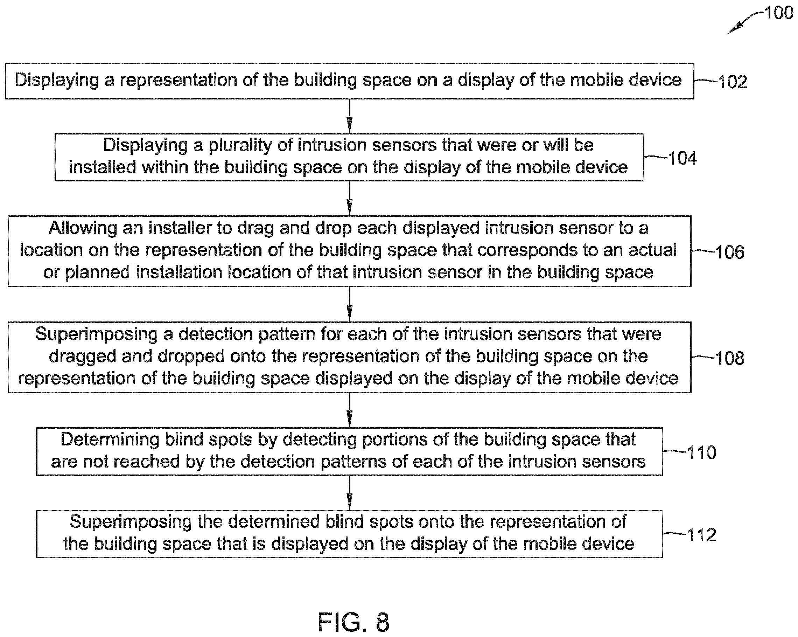

Figure 8 is a flow diagram showing an illustrative method 100 of using a mobile device to plan installation of a plurality of intrusion sensors within a building space, the mobile device including a user interface including a display, each of the plurality of intrusion sensors having a detection pattern that is unique to each intrusion sensor. A representation of the building space is displayed on a display of the mobile device, as indicated at block 102. In some cases, a camera of the mobile device may be used to capture the representation of the building space. In some instances, the representation of the building space may be downloaded to the mobile device.

A plurality of intrusion sensors that were or will be installed within the building space are displayed on the display of the mobile device, as indicated at block 104. An installer is allowed to drag and drop each displayed intrusion sensor to a location on the representation of the building space that corresponds to an actual or planned installation location of that intrusion sensor in the building space, as indicated at block 106. An identify of each of the intrusion sensors that were or will be installed within the building space may be received from the installer. For example, the identity of each of the intrusion sensors may be received via the user interface of the mobile device. In some cases, the identify of each of the intrusions sensors may be received by scanning a code such as a QR code or a barcode on each of the intrusions sensors using a camera of the mobile device. A detection pattern for each of the intrusion sensors that were dragged and dropped onto the representation of the building space is determined and then superimposed on the representation of the building space displayed on the display of the mobile device, as indicated at block 108. In some cases, the detection patterns for each of the intrusion sensors may be looked up in a cloud-based server, but this is not required.

Blind spots are determined by detecting portions of the building space that are not covered or otherwise reached by the detection patterns of each of the intrusion sensors, as indicated at block 110. The determined blind spots are superimposed onto the representation of the building space that is displayed on the display of the mobile device, as indicated at block 112. In some cases, determining blind spots may be determined by one or more processors of the mobile device. In some cases, determining blind spots may be determined by one or more processors of a remote server (or other hardware device) that is in communication with the mobile device. The method 100 includes finding areas in which the detection pattern of two or more intrusion sensors overlap, and a greater confidence level is assigned to sensor alarms that are triggered within an overlap area.

In some cases, each blind spot may be evaluated in accordance with a security level assigned to a particular area of the building space. For blind spots within an area with a low security level assigned to it, displaying the blind spots may be displayed in a first color and blind spots within an area with a high security level assigned to it, may be displayed the blind spots in a second color.

In some cases, the mobile device, remote server and/or other hardware device may automatically suggest to the installer a placement location and in some cases a sensor brand/model for one or more new sensors and/or modified installation locations for existing sensors to reduce undesirable blinds spots. This may be done by processing the location and dimensions of the building space, along with the known detection pattern of available intrusion sensors, to produce an optimum selection of intrusion sensor types at optimum placement locations in the building space. This may not only help reduce the time required to install the intrusion sensors, but may also reduce the overall cost of the security system by using less intrusion sensors while achieving a desired coverage.

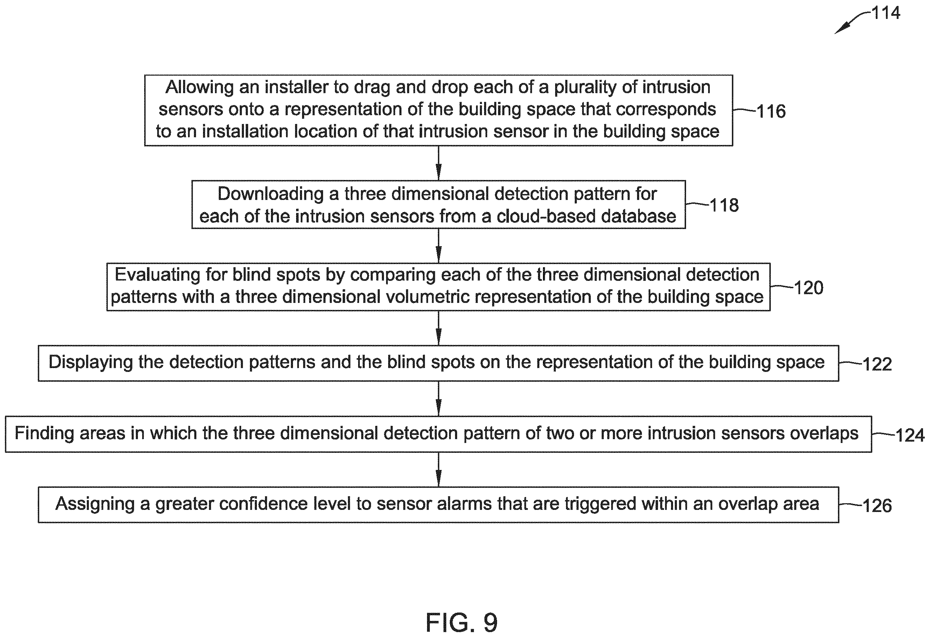

Figure 9 is a flow diagram showing an illustrative method 114 of using a mobile device to plan installation of a plurality of intrusion sensors within a building space, the mobile device including a user interface including a display, each of the plurality of intrusion sensors having a detection pattern that is unique to each intrusion sensor type. An installer is allowed to drag and drop each of a plurality of intrusion sensors onto a representation of the building space that corresponds to an installation location of that intrusion sensor in the building space, as indicated at block 116. A three-dimensional detection pattern for each of the intrusion sensors is downloaded from a cloud-based database, as indicated at block 118. Evaluating for blind spots includes comparing each of the three-dimensional detection patterns with a three-dimensional volumetric representation of the building space, as indicated at block 120. The detection patterns and the blind spots are displayed on the representation of the building space, as indicated at block 122.

In some cases, the method 114 may further include finding areas in which the three-dimensional detection pattern of two or more intrusion sensors overlap, as indicated at block 124. During operation of the security system, a greater confidence level may be assigned to sensor alarms that are triggered within an overlap area, as indicated at block 126.

Figure 10 provides an example of an illustrative representation 130 of a building space such as the building space 10. The representation 130 can be seen as including a number of rooms, such as a conference room 132, a meeting room 134, a reception area 136, an open lounge 138 and an open workspace 140. The upper portion of the open workspace 140 has a first motion detector 142, labeled as MD1, installed at a first location and a second motion detector 144, labeled as MD2, installed at a second location.

A first detection pattern 146 is superimposed onto the representation 130 and represents the detection pattern of the first motion detector 142. A second detection pattern 148 is superimposed onto the representation 130 and represents the detection pattern of the second motion detector 144. The first detection pattern 146 and the second detection pattern 148 can be seen as three-dimensional cones that each extend outwardly from their corresponding sensor locations. It will be appreciated that the second detection pattern 148 is different than the first detection pattern 146. It will also be appreciated that there is a small overlap area 150 where the first detection pattern 146 overlaps with the second detection pattern 148. By comparing the first detection pattern 146 and the second detection pattern 148 with the open workspace 140, it can be seen that a blind spot 152 exists in the upper left corner of the open workspace 140. While the blind spot 152 is shown as a circular or ovoid graphics icon, it will be appreciated that the blind spot 152 actually extends further into the area not covered by the first detection pattern 146 and/or the second detection pattern 148. A glass break detection sensor 160, labeled GB1, is installed in the open lounge 138. A third detection pattern 156 corresponding to the glass break detection sensor 160 is superimposed on the representation 130.

Those skilled in the art will recognize that the present disclosure may be manifested in a variety of forms other than the specific embodiments described and contemplated herein. Accordingly, departure in form and detail may be made without departing from the scope of the appended claims.

## Claims

1. A method comprising:
displaying on a display a representation (130) of a building space (10);
allowing a user to enter a user input via a user interface (24) in order to place a representation of each of a plurality of intrusion sensors (142, 144, 160) at a location on the representation (130) of the building space (10) that corresponds to an actual or planned installation location of the corresponding intrusion sensor (142, 144, 160) in the building space (10), each of the plurality of intrusion sensors (142, 144, 160) being a non-video based motion sensor and/or a glass break sensor and each having a predefined detection zone (146, 148, 156) representative of a geographic area that the corresponding intrusion sensor covers;
storing the representation of a building space and the placement location of each of the plurality of intrusion sensors;
displaying on the representation (130) of the building space (10) a visual representation of the predefined detection zone (146, 148, 156) for each of the placed intrusion sensors (142, 144, 160);
identifying an overlap region (150) in the building space (10) where the predefined detection zones (146, 148, 156) of two or more intrusion sensors overlap, and grouping the corresponding placed intrusion sensors into a first group;
monitoring an output of each of the intrusion sensors (142, 144, 160) for detected intrusion events; and
assigning a greater confidence level over a default confidence level to detected intrusion events that are detected to be occurring at a common time by two or more of the intrusion sensors in the first group.

2. The method of claim 1, further comprising:
determining one or more blind spots (152) in the building space (10) that are not covered by any of the predefined detection zones (146, 148, 156) of the placed intrusion sensors (142, 144, 160); and
highlighting on the representation of the building space one or more of the blind spots (152) on the representation of the building space (10).

3. The method of claim 2, wherein the building space (10) has a first security zone with a first security level and a second security zone with a second security level, and wherein highlighting one or more of the blind spots (152) on the representation (130) of the building space (10) comprises highlighting the blind spots (152) that correspond to the first security zone and not highlighting the blind spots (152) that correspond to the second security zone.

4. The method of claim 2, wherein the building space (10) has a first security zone with a first security level and a second security zone with a second security level, and wherein highlighting one or more of the blind spots (152) on the representation (130) of the building space (10) comprises highlighting the blind spots (152) that correspond to the first security zone in a first format and highlighting the blind spots (152) that correspond to the second security zone in a second format.

5. The method of claim 4, wherein the first format comprises a first color and the second format comprises a second color that is different from the first color.

6. The method of claim 1, wherein the plurality of intrusion sensors (142, 144, 160) comprises non-video based motion sensors.

7. The method of claim 6, wherein the non-video based motion sensors comprise one or more of a Passive InfraRed (PIR) motion detector and/or an ultrasonic motion detection.

8. The method of claim 1, wherein the plurality of intrusion sensors (142, 144, 160) comprises a glass break detector.

9. The method of claim 1, further comprising: identifying a location of an object in the building space (10) to be in the overlap region (150) when detected intrusion events are detected to be occurring at a common time by two or more of the intrusion sensors (142, 144, 160) in the first group.

10. The method of claim 1, wherein the predefined detection zone representative of a geographic area of at least one of the plurality of intrusion sensors (142, 144, 160) comprises a three dimensional cone with a particular cone length and a particular cone angle.

11. A system comprising:
a memory (22) for storing a representation (130) of a building space (10);
a user interface (24) including a display (26);
a controller (28) operatively coupled to the memory (22) and the user interface (24), the controller (28) configured to:
display on the display (26) of the user interface (24) at least part of the representation (130) of the building space (10);
allow a user to place via the user interface (24) a representation of each of a plurality of intrusion sensors (142, 144, 160) at a location on the representation (130) of the building space (10) that corresponds to an actual or planned installation location of the corresponding intrusion sensor (142, 144, 160) in the building space (10), each of the plurality of intrusion sensors (142, 144, 160) being a non-video based motion sensor and/or a glass break sensor and each having a predefined detection zone (146, 148, 156) representative of a geographic area that the corresponding intrusion sensor covers;
display on the display (26) a visual representation of the predefined detection zone (146, 148, 156) for each of the placed intrusion sensors (142, 144, 160) on the representation (130) of the building space (10);
identify an overlap region (150) in the building space (10) where the predefined detection zones (146, 148, 156) of two or more intrusion sensors overlap, and grouping the corresponding placed intrusion sensors into a first group;
monitor an output of each of the intrusion sensors (142, 144, 160) for detected intrusion events; and
assign a greater confidence level over a default confidence level to detected intrusion events that are detected to be occurring at a common time by two or more of the intrusion sensors in the first group.

12. The system of claim 11, wherein the controller (28) is further configured to:
determine one or more blind spots (152) in the building space (10) that are not covered by any of the predefined detection zones (146, 148, 156) of the placed intrusion sensors (142, 144, 160); and
highlight on the representation (130) of the building space (10) one or more of the blind spots (152) on the representation (130) of the building space (10).

13. The system of claim 11, wherein the controller (28) is further configured to: identify a location of an object in the building space (10) to be in the overlap region (150) when detected intrusion events are detected to be occurring at a common time by two or more of the intrusion sensors (142, 144, 160) in the first group.

## Patentansprüche

1. Verfahren, umfassend:
Anzeigen einer Darstellung (130) einer Gebäudefläche (10) auf einer Anzeige;
Ermöglichen, dass ein Benutzer über eine Benutzerschnittstelle (24) eine Benutzereingabe eingibt, um eine Darstellung jedes einer Vielzahl von Einbruchssensoren (142, 144, 160) an einem Ort auf der Darstellung (130) der Gebäudefläche (10) zu platzieren, der einem tatsächlichen oder geplanten Installationsort des entsprechenden Einbruchssensors (142, 144, 160) in der Gebäudefläche (10) entspricht, wobei jeder der Vielzahl von Einbruchssensoren (142, 144, 160) ein nicht-videobasierter Bewegungssensor und/oder ein Glasbruchsensor ist und jeder eine vordefinierte Detektionszone (146, 148, 156) aufweist, die einen geographischen Bereich darstellt, den der entsprechende Einbruchssensor abdeckt;
Speichern der Darstellung einer Gebäudefläche und des Platzierungsortes jedes der Vielzahl von Einbruchssensoren;
Anzeigen einer visuellen Darstellung der vordefinierten Detektionszone (146, 148, 156) für jeden der platzierten Einbruchssensoren (142, 144, 160) auf der Darstellung (130) der Gebäudefläche (10);
Identifizieren einer Überlappungsregion (150) in der Gebäudefläche (10), wo sich die vordefinierten Detektionszonen (146, 148, 156) von zwei oder mehr Einbruchssensoren überlappen, und Gruppieren der entsprechenden platzierten Einbruchssensoren in eine erste Gruppe;
Überwachen einer Ausgabe jedes der Einbruchssensoren (142, 144, 160) auf detektierte Einbruchsereignisse; und
Zuweisen eines höheren Konfidenzniveaus über einem standardmäßigen Konfidenzniveau für detektierte Einbruchsereignisse, deren Auftreten zu einem gemeinsamen Zeitpunkt von zwei oder mehr der Einbruchssensoren in der ersten Gruppe detektiert wird.

2. Verfahren nach Anspruch 1, ferner umfassend:
Ermitteln eines oder mehrerer blinder Flecken (152) in der Gebäudefläche (10), die nicht von einer der vordefinierten Detektionszonen (146, 148, 156) der platzierten Einbruchssensoren (142, 144, 160) abgedeckt sind; und
Hervorheben auf der Darstellung der Gebäudefläche eines oder mehrerer der blinden Flecken (152) auf der Darstellung der Gebäudefläche (10).

3. Verfahren nach Anspruch 2, wobei die Gebäudefläche (10) eine erste Sicherheitszone mit einem ersten Sicherheitsniveau und eine zweite Sicherheitszone mit einem zweiten Sicherheitsniveau aufweist, und wobei das Hervorheben eines oder mehrerer der blinden Flecken (152) auf der Darstellung (130) der Gebäudefläche (10) das Hervorheben der blinden Flecken (152), die der ersten Sicherheitszone entsprechen, und das Nichthervorheben der blinden Flecken (152), die der zweiten Sicherheitszone entsprechen, umfasst.

4. Verfahren nach Anspruch 2, wobei die Gebäudefläche (10) eine erste Sicherheitszone mit einem ersten Sicherheitsniveau und eine zweite Sicherheitszone mit einem zweiten Sicherheitsniveau aufweist, und wobei das Hervorheben eines oder mehrerer der blinden Flecken (152) auf der Darstellung (130) der Gebäudefläche (10) das Hervorheben der blinden Flecken (152), die der ersten Sicherheitszone entsprechen, in einem ersten Format und das Hervorheben der blinden Flecken (152), die der zweiten Sicherheitszone entsprechen, in einem zweiten Format umfasst.

5. Verfahren nach Anspruch 4, wobei das erste Format eine erste Farbe umfasst und das zweite Format eine zweite Farbe umfasst, die sich von der ersten Farbe unterscheidet.

6. Verfahren nach Anspruch 1, wobei die Vielzahl von Einbruchssensoren (142, 144, 160) nicht-videobasierte Bewegungssensoren umfasst.

7. Verfahren nach Anspruch 6, wobei die nicht-videobasierten Bewegungssensoren einen oder mehrere aus einem Passiv-Infrarot- (PIR-) Bewegungsdetektor und/oder einer Ultraschallbewegungsdetektion umfassen.

8. Verfahren nach Anspruch 1, wobei die Vielzahl von Einbruchssensoren (142, 144, 160) einen Glasbruchdetektor umfasst.

9. Verfahren nach Anspruch 1, ferner umfassend:
Identifizieren, dass sich ein Ort eines Objekts in der Gebäudefläche (10) in der Überlappungsregion (150) befindet, wenn das Auftreten von detektierten Einbruchsereignissen zu einem gemeinsamen Zeitpunkt von zwei oder mehr der Einbruchssensoren (142, 144, 160) in der ersten Gruppe detektiert wird.

10. Verfahren nach Anspruch 1, wobei die vordefinierte Detektionszone, die einen geographischen Bereich von mindestens einem der Vielzahl von Einbruchssensoren (142, 144, 160) darstellt, einen dreidimensionalen Kegel mit einer bestimmten Kegellänge und einem bestimmten Kegelwinkel umfasst.

11. System, umfassend:
einen Speicher (22) zum Speichern einer Darstellung (130) einer Gebäudefläche (10);
eine Benutzerschnittstelle (24), die eine Anzeige (26) beinhaltet;
eine Steuereinheit (28), die betriebsfähig mit dem Speicher (22) und der Benutzerschnittstelle (24) gekoppelt ist, wobei die Steuereinheit (28) dazu konfiguriert ist:
mindestens einen Teil der Darstellung (130) einer Gebäudefläche (10) auf der Anzeige (26) der Benutzerschnittstelle (24) anzuzeigen;
zu ermöglichen, dass ein Benutzer über die Benutzerschnittstelle (24) eine Darstellung jedes einer Vielzahl von Einbruchssensoren (142, 144, 160) an einem Ort auf der Darstellung (130) der Gebäudefläche (10) platziert, der einem tatsächlichen oder geplanten Installationsort des entsprechenden Einbruchssensors (142, 144, 160) in der Gebäudefläche (10) entspricht, wobei jeder der Vielzahl von Einbruchssensoren (142, 144, 160) ein nicht-videobasierter Bewegungssensor und/oder ein Glasbruchsensor ist und jeder eine vordefinierte Detektionszone (146, 148, 156) aufweist, die einen geographischen Bereich darstellt, den der entsprechende Einbruchssensor abdeckt;
auf der Anzeige (26) eine visuelle Darstellung der vordefinierten Detektionszone (146, 148, 156) für jeden der platzierten Einbruchssensoren (142, 144, 160) auf der Darstellung (130) der Gebäudefläche (10) anzuzeigen;
eine Überlappungsregion (150) in der Gebäudefläche (10) zu identifizieren, wo sich die vordefinierten Detektionszonen (146, 148, 156) von zwei oder mehr Einbruchssensoren überlappen, und Gruppieren der entsprechenden platzierten Einbruchssensoren in eine erste Gruppe;
eine Ausgabe jedes der Einbruchssensoren (142, 144, 160) auf detektierte Einbruchsereignisse zu überwachen; und
detektierten Einbruchsereignissen, deren Auftreten zu einem gemeinsamen Zeitpunkt von zwei oder mehr der Einbruchssensoren in der ersten Gruppe detektiert wird, ein höheres Konfidenzniveau über einem standardmäßigen Konfidenzniveau zuzuweisen.

12. System nach Anspruch 11, wobei das Steuereinheit (28) ferner dazu konfiguriert ist:
einen oder mehrere blinde Flecken (152) in der Gebäudefläche (10) zu ermitteln, die nicht von einer der vordefinierten Detektionszonen (146, 148, 156) der platzierten Einbruchssensoren (142, 144, 160) abgedeckt sind; und
auf der Darstellung (130) der Gebäudefläche (10) einen oder mehrere der blinden Flecken (152) auf der Darstellung (130) der Gebäudefläche (10) hervorzuheben.

13. System nach Anspruch 11, wobei die Steuereinheit (28) ferner dazu konfiguriert ist: zu identifizieren, dass sich ein Ort eines Objekts in der Gebäudefläche (10) in der Überlappungsregion (150) befindet, wenn das Auftreten von detektierten Einbruchsereignissen zu einem gemeinsamen Zeitpunkt von zwei oder mehr der Einbruchssensoren (142, 144, 160) in der ersten Gruppe detektiert wird.

## Revendications

1. Procédé comprenant :
l'affichage sur un affichage d'une représentation (130) d'un espace de bâtiment (10) ;
le fait de permettre à un utilisateur d'entrer une entrée utilisateur via une interface utilisateur (24) afin de mettre en place une représentation de chacun d'une pluralité de capteurs d'intrusion (142, 144, 160) à un emplacement sur la représentation (130) de l'espace de bâtiment (10) qui correspond à un emplacement d'installation réel ou prévu du capteur d'intrusion (142, 144, 160) correspondant dans l'espace de bâtiment (10), chacun de la pluralité de capteurs d'intrusion (142, 144, 160) étant un capteur de mouvement non basé sur une vidéo et/ou un capteur de bris de vitre et ayant chacun une zone de détection prédéfinie (146, 148, 156) représentative d'une zone géographique couverte par le capteur d'intrusion correspondant ;
le stockage de la représentation d'un espace de bâtiment et de l'emplacement de mise en place de chacun de la pluralité de capteurs d'intrusion ;
l'affichage sur la représentation (130) de l'espace de bâtiment (10) d'une représentation visuelle de la zone de détection prédéfinie (146, 148, 156) pour chacun des capteurs d'intrusion (142, 144, 160) mis en place ;
l'identification d'une région de chevauchement (150) dans l'espace de bâtiment (10) où les zones de détection prédéfinies (146, 148, 156) de deux ou plusieurs capteurs d'intrusion se chevauchent, et le regroupement des capteurs d'intrusion mis en place correspondants en un premier groupe ;
la surveillance d'une sortie de chacun des capteurs d'intrusion (142, 144, 160) pour des événements d'intrusion détectés ; et
l'attribution d'un niveau de confiance supérieur à un niveau de confiance par défaut à des événements d'intrusion détectés qui sont détectés comme se produisant à un moment commun par deux ou plusieurs des capteurs d'intrusion du premier groupe.

2. Procédé selon la revendication 1, comprenant en outre :
la détermination d'un ou plusieurs angles morts (152) dans l'espace de bâtiment (10) qui ne sont couverts par aucune des zones de détection prédéfinies (146, 148, 156) des capteurs d'intrusion (142, 144, 160) mis en place ; et
la mise en évidence sur la représentation de l'espace de bâtiment d'un ou plusieurs des angles morts (152) sur la représentation de l'espace de bâtiment (10).

3. Procédé selon la revendication 2, dans lequel l'espace de bâtiment (10) a une première zone de sécurité avec un premier niveau de sécurité et une seconde zone de sécurité avec un second niveau de sécurité, et dans lequel la mise en évidence d'un ou plusieurs des angles morts (152) sur la représentation (130) de l'espace de bâtiment (10) comprend la mise en évidence des angles morts (152) qui correspondent à la première zone de sécurité et la non-mise en évidence des angles morts (152) qui correspondent à la seconde zone de sécurité.

4. Procédé selon la revendication 2, dans lequel l'espace de bâtiment (10) a une première zone de sécurité avec un premier niveau de sécurité et une seconde zone de sécurité avec un second niveau de sécurité, et dans lequel la mise en évidence d'un ou plusieurs des angles morts (152) sur la représentation (130) de l'espace de bâtiment (10) comprend la mise en évidence des angles morts (152) qui correspondent à la première zone de sécurité dans un premier format et la mise en évidence des angles morts (152) qui correspondent à la seconde zone de sécurité dans un second format.

5. Procédé selon la revendication 4, dans lequel le premier format comprend une première couleur et le second format comprend une seconde couleur qui est différente de la première couleur.

6. Procédé (selon la revendication 1, dans lequel la pluralité de capteurs d'intrusion (142, 144, 160) comprend des capteurs de mouvement non basés sur une vidéo.

7. Procédé selon la revendication 6, dans lequel les capteurs de mouvement non basés sur une vidéo comprennent un ou plusieurs d'un détecteur de mouvement à infrarouge passif (PIR) et/ou d'une détection de mouvement par ultrasons.

8. Procédé selon la revendication 1, dans lequel la pluralité de capteurs d'intrusion (142, 144, 160) comprend un détecteur de bris de vitre.

9. Procédé selon la revendication 1, comprenant en outre :
l'identification d'un emplacement d'un objet dans l'espace de bâtiment (10) comme étant dans la région de chevauchement (150) lorsque des événements d'intrusion détectés sont détectés comme se produisant à un moment commun par deux ou plusieurs des capteurs d'intrusion (142, 144, 160) dans le premier groupe.

10. Procédé selon la revendication 1, dans lequel la zone de détection prédéfinie représentative d'une zone géographique d'au moins un de la pluralité de capteurs d'intrusion (142, 144, 160) comprend un cône tridimensionnel avec une longueur de cône particulière et un angle de cône particulier.

11. Système comprenant :
une mémoire (22) pour stocker une représentation (130) d'un espace de bâtiment (10) ;
une interface utilisateur (24) incluant un affichage (26) ;
un contrôleur (28) couplé fonctionnellement à la mémoire (22) et à l'interface utilisateur (24), le contrôleur (28) étant configuré pour :
afficher sur un affichage (26) de l'interface utilisateur (24) au moins une partie de la représentation (130) de l'espace de bâtiment (10) ;
permettre à un utilisateur de mettre en place via l'interface utilisateur (24) une représentation de chacun d'une pluralité de capteurs d'intrusion (142, 144, 160) à un emplacement sur la représentation (130) de l'espace de bâtiment (10) qui correspond à un emplacement réel ou emplacement d'installation prévu du capteur d'intrusion (142, 144, 160) correspondant dans l'espace de bâtiment (10), chacun de la pluralité de capteurs d'intrusion (142, 144, 160) étant un capteur de mouvement non basé sur une vidéo et/ou un capteur de bris de vitre et ayant chacun une zone de détection prédéfinie (146, 148, 156) représentative d'une zone géographique couverte par le capteur d'intrusion correspondant ;
afficher sur l'affichage (26) une représentation visuelle de la zone de détection prédéfinie (146, 148, 156) pour chacun des capteurs d'intrusion (142, 144, 160) mis en place sur la représentation (130) de l'espace de bâtiment (10) ;
identifier une région de chevauchement (150) dans l'espace de bâtiment (10) où les zones de détection prédéfinies (146, 148, 156) de deux ou plusieurs capteurs d'intrusion se chevauchent, et regrouper les capteurs d'intrusion mis en place correspondants en un premier groupe ;
surveiller une sortie de chacun des capteurs d'intrusion (142, 144, 160) pour des événements d'intrusion détectés ; et
attribuer un niveau de confiance supérieur à un niveau de confiance par défaut aux événements d'intrusion détectés qui sont détectés comme se produisant à un moment commun par deux ou plusieurs des capteurs d'intrusion du premier groupe.

12. Système selon la revendication 11, dans lequel le contrôleur (28) est en outre configuré pour :
déterminer un ou plusieurs angles morts (152) dans l'espace de bâtiment (10) qui ne sont couverts par aucune des zones de détection prédéfinies (146, 148, 156) des capteurs d'intrusion (142, 144, 160) mis en place ; et
mettre en évidence sur la représentation (130) de l'espace de bâtiment (10) un ou plusieurs des angles morts (152) sur la représentation (130) de l'espace de bâtiment (10).

13. Système selon la revendication 11, dans lequel le contrôleur (28) est en outre configuré pour : identifier un emplacement d'un objet dans l'espace de bâtiment (10) comme étant dans la région de chevauchement (150) lorsque des événements d'intrusion détectés sont détectés comme se produisant à un moment commun par deux ou plusieurs des capteurs d'intrusion (142, 144, 160) du premier groupe.
